## Europäisches Patentamt

## European Patent Office

## Office européen des brevets

(11) Veröffentlichungsnummer. **0 190 602**
**B1**

(12) **EUROPÄISCHE PATENTSCHRIFT**

(45) Veröffentlichungstag der Patentschrift:
13.09.89

(51) Int. Cl.⁴: **H 02 K 5/22**

(21) Anmeldenummer: **86100752.4**

(22) Anmeldetag: **21.01.86**

(54) **Ständergehäuse für eine oberflächengekühlte elektrische Maschine.**

(30) Priorität: **04.02.85 DE 3503687**

(43) Veröffentlichungstag der Anmeldung:
**13.08.86 Patentblatt 86/33**

(45) Bekanntmachung des Hinweises auf die Patenterteilung:
**13.09.89 Patentblatt 89/37**

(84) Benannte Vertragsstaaten:
**DE FR IT SE**

(56) Entgegenhaltungen:
**CH-A-289 502**
**DE-U-1 728 486**
**DE-U-7 918 584**

(73) Patentinhaber: **Siemens Aktiengesellschaft,
Wittelsbacherplatz 2, D-8000 München 2 (DE)**

(72) Erfinder: **Hilneder, Siegfried, Appler- Strasse 28,
D-8540 Schwabach (DE)**
Erfinder: **Plackner, Kurt, Dipl.- Ing. (FH), Johann-
Krieger- Strasse 17, D-8500 Nürnberg (DE)**

## Beschreibung

Die Erfindung betrifft ein Ständergehäuse nach dem Oberbegriff des Anspruchs 1.

Durch das DE-U-1 728 486 ist ein solches mit gleichmäßig radial und achsparallel erstreckten Kühlrippen versehenes Ständergehäuse bekannt. An einer Stelle des Umfanges, etwa unter einem Winkel von 45° gegenüber der Mittelsenkrechten ist an dem Ständergehäuse ein Anschlußflansch für einen Klemmenkasten angeformt. Der Klemmenkasten ist direkt an dem Anschlußflansch befestigt. Anschlußflansch und Klemmenkasten müssen daher aneinander angepaßt sein. Da der Anschlußflansch am Ständergehäuse angeformt ist, bestehen praktisch keine Variationsmöglichkeiten für den anzubauenden Klemmenkasten. Auch die Anbaurichtung ist auf zwei Möglichkeiten, nämlich auf einen Versatz von jeweils 180°, eingeschränkt. Durch die Ausbildung des Anschlußflansches zwischen den Kühlrippen geht ein Teil der wirksamen Kühlfläche verloren.

Der Erfindung liegt die Aufgabe zugrunde, Ständergehäuse nach dem Oberbegriff ohne Änderung oder Minderung der Kühlwirkung der Kühlrippen auf einfache Weise mit ebenen Anschlußflächen für den Klemmenkasten fertigen zu können und eine einfache Verlegung der Ständerleitungen zum Klemmenkasten zu ermöglichen und gegebenenfalls mehrere wahlweise verwendbare Anschlußflansche für den Klemmenkasten vorzusehen, der so am Ständergehäuse angeordnet ist, daß er die Kühlluft durch die Kühlrippen an allen Stellen ungestört läßt.

Die Lösung der gestellten Aufgabe gelingt auf besonders einfache Weise durch die kennzeichnenden Merkmale des Anspruchs 1.

Bei einer Breite des Anschlußflansches gleich der Breite des betreffenden Gehäuseteils ergeben sich in der Regel rechteckförmige Anschlußflansche, deren Länge größer als die besagte Breite ist. Dementsprechend müßten auch die Anschlußflächen des Klemmenkastens bei dessen unmittelbarer Anordnung am Anschlußflansch bemessen sein. Durch die Zwischenschaltung einer Adapterkonsole ist die Verwendung von stets gleichen Klemmenkästen möglich.

Bei vier gleichmäßig verteilten Rippensegmenten am Ständergehäuse ist die Flanschebene zu den Rippenebenen der benachbarten Rippensegmente um einen Winkel von jeweils 45° geneigt. Von den vier Gehäuseteilen sind üblicherweise zwei mit Fußleisten versehen, so daß die beiden anderen Gehäuseteile für die Anbringung des Klemmenkastens benutzt werden können. Der jeweils nicht mit dem Klemmenkasten bestückte Gehäuseteil kann durch einen Deckel verschlossen werden. Bei einer Umsetzfähigkeit um jeweils 180° des Klemmenkastens ergeben sich vier verschiedene Anschlußlagen für den Klemmenkasten mit den äußeren Anschlüssen. Dadurch, daß die Anschlußfläche der Adapterkonsole für den Klemmenkasten und der Klemmenkastenflansch quadratisch ausgebildet sind, ist der Klemmenkasten um viermal 90 versetzbar. Dadurch ist eine Vielzahl von Anbringungsmöglichkeiten des Klemmenkastens geschaffen.

Werden Adapterkonsolen verwendet, bei denen die Ebenen der beiden Anschlußflächen um einen Winkel von 135° gegeneinander geneigt sind, dann ergibt sich eine Anordnung des Klemmenkastens oben oder seitlich am Ständergehäuse.

Ein Ausführungsbeispiel der Erfindung wird nachfolgend anhand der Zeichnung näher erläutert. Es zeigen:

Fig 1 einen Querschnitt durch einen Quadranten des Ständergehäuses,

Fig 2 und 3 eine Maschine mit einem solchen Ständergehäuse mit verschiedener Lage des Klemmenkastens in perspektivischer Ansicht und

Fig 4 und 5 Frontansichten der Gegenstände der Fig 2 und 3

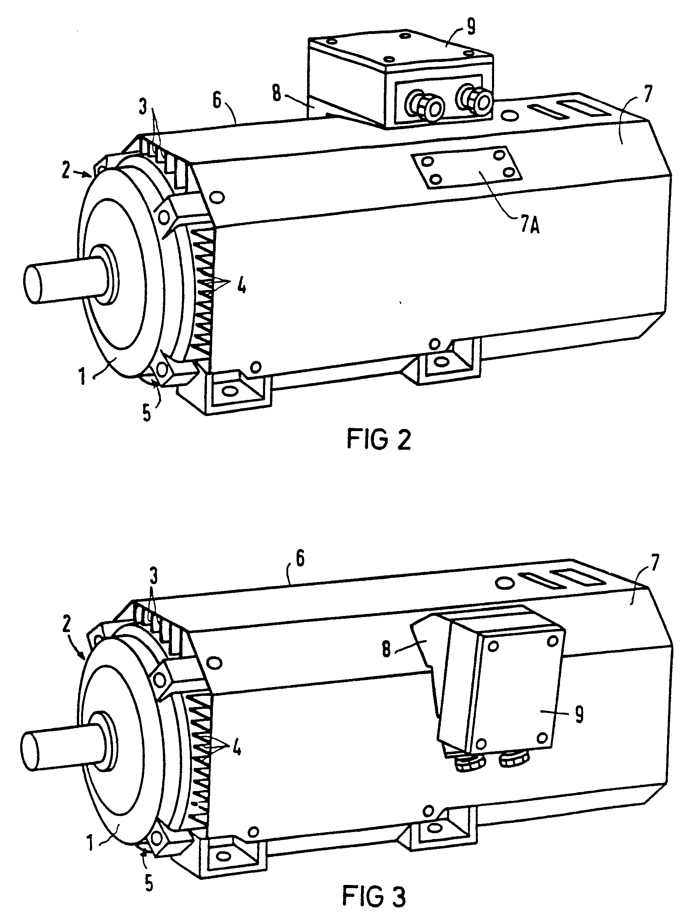

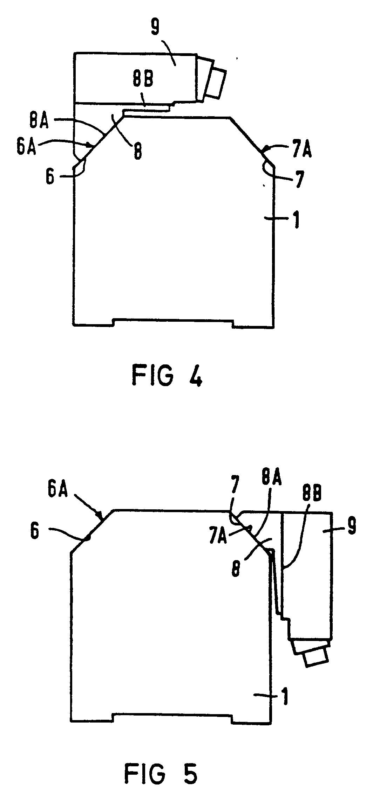

wobei in den Fig 2 bis 5 die Rippensegmente durch einen Blechmantel umhüllt sind, der eine Verschmutzung der Rippenzwischenräume verhindert und die Kühlluftführung verbessert.

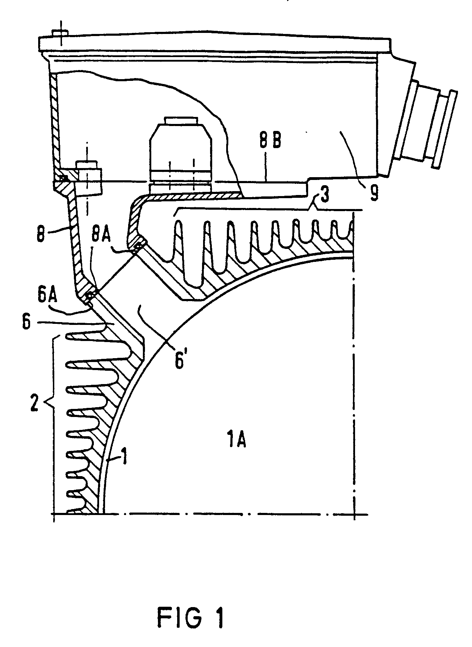

Das Ständergehäuse 1 enthält vier Rippensegmente 2, 3, 4 und 5, von denen in Fig 1 nur zwei Rippensegmente 2 und 3 dargestellt sind. Zwischen den einzelnen Rippensegmenten 2 und 3 sowie 3 und 4 sind die Gehäuseteile 6 und 7 um 45° geneigt angeordnet und in gleicher Weise als zum Gehäuseinneren 1A offene Kanäle (wie für 6' in Fig 1 gezeigt) ausgebildet.

Auf einem Teil ihrer Länge sind diese Gehäuseteile 6, 7 als Anschlußflansch 6A, 7A für eine adaptierende Winkelkonsole 8 ausgebildet, deren an den Anschlußflansch grenzende Anschlußfläche 8A entsprechend rechteckig ausgebildet und um 135° zur zweiten quadratischen Anschlußfläche 8B für den Klemmenkasten 9 geneigt ist.

Der Klemmenkasten kann dann oben oder seitlich und um viermal 90° versetzt angeordnet werden, d.h. in 12 verschiedenen Stellungen, wobei er in keiner Stellung die Kühlung beeinträchtigt. Dies gilt betreffs der Kühlung auch für die unmittelbare Anordnung des Klemmenkastens 9 an einem Gehäuseteil 6 oder 7.

## Patentansprüche

1. Ständergehäuse für eine oberflächengekühlte elektrische Maschine mit zur Längsachse des Maschinengehäuses und zueinander parallelen Kühlrippen und mit einem zwischen den Kühlrippen liegenden Anschlußflansch (6A, 7A) für einen Klemmenkasten (9), welcher Anschlußflansch (6A, 7A) einen zum Gehäuseinneren (1A) hin offenen Kanal (6') aufweist und dessen Flanschebene einen Abstand zu den benachbarten Rippenkanten hat, dadurch gekennzeichnet,

daß bei einer segmentweisen Anordnung der Kühlrippen und mindestens einem zwischen zwei benachbarten Rippensegmenten (2, 3) schräg angeordneten Gehäuseteil (6 bzw.7), dieser auf einem Teil seiner Länge als verschließbarer ebener Anschlußflansch (6A, 7A) mit dem zum Gehäuseinneren (1A) offenen Kanal (6') ausgebildet ist, wobei die Breite des Anschlußflansches (6A, 7A) höchstens gleich der Breite des Gehäuseteils (6, 7) bemessen ist, daß ferner der mit breiterem Kastenflansch 8B) ausgebildete Klemmenkasten (9) über eine mit entsprechend seiner gegenüber dem Anschlußflansch gewünschten Neigung angepaßten Anschlußflächen versehene Adapterkonsole (8) an dem Anschlußflansch (6A bzw. 7A) befestigt ist.

2. Ständergehäuse nach Anspruch 1 mit vier gleichmäßig am Umfang verteilten Rippensegmenten, dadurch gekennzeichnet, daß die Flanschebene zu den Rippenebenen der benachbarten Rippensegmente (2, 3, 4) um einen Winkel von jeweils 45° geneigt ist.

3. Ständergehäuse nach Anspruch 1 oder 2, dadurch gekennzeichnet, daß die Anschlußfläche (8A) der Adapterkonsole (8) für den Klemmenkasten (9) und der Klemmenkastenflansch quadratisch ausgebildet sind.

4. Ständergehäuse nach Anspruch 2 oder 3, dadurch gekennzeichnet, daß die Ebenen der beiden Anschlußflächen (8A, 8B) der Adapterkonsole (8) um einen Winkel von 135° gegeneinander geneigt sind.

## Claims

1. Stator housing for a surface-cooled electric machine having cooling fins which are parallel to the longitudinal axis of the machine housing and to each other and having a connecting flange (6A, 7A) for a terminal box (9), which connecting flange (6A, 7A) lies between the cooling fins and has a channel (6') open towards the housing interior (1A) and the flange plane of which is at a distance from the adjacent fin edges, characterised in that with a segment-type arrangement of the cooling fins and at least one housing portion (6 or 7) arranged obliquely between two adjacent segments of fins (2, 3), said housing portion is formed along one portion of its length as a closeable planar connecting flange (6A, 7A) with the channel (6') opening towards the housing interior (1A), the width of the connecting flange (6A, 7A) being dimensioned so that it is at most equal to the width of the housing portion (6, 7), and in that, furthermore, the terminal box (9) which is formed with a wider box flange (8B) is secured to the connecting flange (6A or 7A) by way of an adaptor console (8) which is provided with connecting surfaces which are correspondingly adapted to its desired inclination in respect of the connecting flange.

2. Stator housing according to claim 1 having four segments of fins which are evenly distributed on the periphery, characterised in that, in each case, the flange plane is inclined with respect to the fin planes of the adjacent segments of fins (2, 3, 4) by an angle of 45°.

3. Stator housing according to claim 1 or 2, characterised in that the connecting surface (8A) of the adaptor console (8) for the terminal box (9) and the terminal box flange are formed so that they are square.

4. Stator housing according to claim 2 or 3, characterised in that the planes of the two connecting surfaces (8A, 8B) of the adaptor console (8) are inclined with respect to each other by an angle of 135°.

## Revendications

1. Carcasse de stator pour une machine électrique à refroidissement de la surface, possédant des ailettes de refroidissement parallèles entre elles et à l'axe longitudinal de la carcasse de la machine, de même qu'une bride de raccordement (6A, 7A) située entre les ailettes de refroidissement pour une boîte à bornes (9), bride (6A, 7A) qui présente un canal (6') ouvert vers l'intérieur (1A) de la carcasse et dont le plan est situé à distance des bords des ailettes voisines, caractérisée en ce que, dans le cas d'une disposition des ailettes de refroidissement par segments et la prévision d'au moins une partie de carcasse (6 ou 7) disposée obliquement entre deux segments à ailettes (2, 3) voisins, cette partie de carcasse est réalisée sur une portion de sa longueur comme une bride de raccordement (6A, 7A) plane et pouvant être fermée, dans laquelle débouche le canal (6') s'ouvrant à l'intérieur (1A) de la carcasse, la largeur de la bride de raccordement (6A, 7A) étant tout au plus égale à la largeur de la partie de carcasse (6, 7) et que, en outre, la boîte à bornes (9), réalisée avec une bride de boîte (8B) plus large, est fixée à la bride de raccordement (6A ou 7A) par l'intermediaire d'une console d'adaptation (8) possédant des surfaces de raccordement adaptées à son inclinaison désirée par rapport à la bride de raccordement.

2. Carcasse selon la revendication 1, possedant quatre segments à ailettes uniformement répartis sur la périphérie, caractérisée en ce que le plan de la bride présente un angle d'inclinaison de 45 par rapport aux plans des ailettes des segments a ailettes (2, 3, 4) voisins.

3. Carcasse selon la revendication 1 ou 2, caractérisée en ce que la surface de raccordement (8A) de la console d'adaptation (8) pour la boîte à bornes (9) et la bride de cette boîte ont une forme carrée.

4. Carcasse selon la revendication 2 ou 3, caractérisée en ce que les plans des deux surfaces de raccordement (8A, 8B) sont inclines l'un par rapport à l'autre d'un angle de 135.

FIG 1

FIG 2

FIG 3

FIG 4

FIG 5